# EUROPEAN PATENT SPECIFICATION

(11) **EP 4 535 326 B1**
(45) Date of publication and mention of the grant of the patent: **01.07.2026**
(21) Application number: 23201217.9
(22) Date of filing: 02.10.2023
(51) Int. Cl.: G08G 1/00, H04M 3/51, H04W 4/90

(54) **METHODS AND SYSTEMS FOR COORDINATING TRANSMISSIONS RELATED TO A VEHICLE EVENT**
VERFAHREN UND SYSTEME ZUR KOORDINATION VON ÜBERTRAGUNGEN IM ZUSAMMENHANG MIT EINEM FAHRZEUGEREIGNIS
PROCÉDÉS ET SYSTÈMES DE COORDINATION DE TRANSMISSIONS ASSOCIÉES À UN ÉVÉNEMENT DE VÉHICULE

(43) Date of publication of application: 09.04.2025
(73) Proprietor: Volvo Car Corporation, 40531 Göteborg (SE)
(72) Inventor: NIELSEN, Johan, SE-446 95 Älvängen (SE)
(74) Representative: Nederlandsch Octrooibureau

(56) References cited:
- WO-A1-2017/082756
- US-A1- 2021 006 960
- US-B1- 10 419 916

## Description

### Technical Field

The current invention relates to automatic crash or other event notifications, in particular by devices, applications and/or vehicles, and the ability to coordinate different streams of information regarding an event, for example, identifying a vehicle and location through different data streams.

### Background Art

In a current vehicle emergency call or Automatic Crash Notification (hereinafter "ACN"), the vehicle typically creates a data flow to a call or call centre where specifics of the vehicle (e.g., Vehicle Identification Number, also referred to as "VIN"; positions, etc.) are transmitted as well as a voice call to the call centre. Currently, these are done using one of the following networks or combination of networks: 2G, 2G+3G, or 2G+3G+4G. However, there is a trend to close down 2G and 3G networks around the world, leaving 4G as the only available network for communication. Vehicles with 2G only or 2G+3G only capabilities are then not be able to perform any notifications or voice calls to the call centre when only the 4G remains.

Even for cars equipped for 4G networks, the current modems in vehicles typically require 2G or 3G to set up voice calls. Thus, they cannot make voice calls when only 4G is available, and can only send a data transmissions to the call centre.

US 2021/006960 A1 (MARTIN MICHAEL JOHN [US]) 7 January 2021, discloses a method of operating an emergency services system. The method includes receiving, by the emergency services system entity, data from a plurality of data sources, including the vehicle involved in the emergency event. Then, the system, by correlating the data from the different sources, determines that a vehicle collision (emergency event) occurred and the vehicle location.

### Summary of Invention

The methods and systems of the current application can provide a way to connect a voice call and data transmissions from a vehicle itself and another device to provide an overall better picture of the crash event to the designated emergency services or other call centre. Thus, the call centre is able to group the data and call and be able to respond to the crash event as if all the data and the call were coming from the vehicle itself, being able to see data related to the vehicle and crash event as well as communicate with those involved, and thereby coordinate an appropriate response. The invention is defined by the independent claims. Dependent claims define preferred embodiments.

According to a first aspect, method for coordinating data transmissions and a voice call in a vehicle crash event comprises receiving at a call centre, from a vehicle system, a vehicle data transmission related to the vehicle and/or crash event; receiving at the call centre, from a device, a voice call and a device data transmission related to one or more of: an identification of the vehicle in which the second device is traveling; a location of the device at the time of the crash event and a time of the crash event; and using the vehicle data transmission and the device data transmission to group the vehicle data transmission, device data transmission and voice call as one crash event.

Such vehicle data transmission related to the vehicle and/or crash event can include one or more of: location (e.g., GPS position) at a time of the crash event, time of the crash event occurrence, time of the start of the data transmission, vehicle identification number (VIN), license plate of the vehicle, and other vehicle identifying information (e.g., type of vehicle, color of vehicle, vehicle model and model year).

Such a method can allow for the coordination and grouping of different streams of data and/or voice calls coming from a vehicle and other device to allow for a more complete understanding of and communication with a vehicle and persons involved in a crash event. Such better understanding by a call centre, as well as voice communication between the persons in the vehicle and call centre can help to coordinate the appropriate response, for example, whether to send a tow-truck or emergency services, to what location they should be sent, communication regarding the likely severity of the crash event to the responding personnel, etc.

As explained in the background, when only 4G network services are available, the current modems in most vehicles cannot perform voice calls from the vehicle, and thus only data could be transmitted automatically in the event of a crash. Thus, a separate device (e.g., cellular or mobile telephone or any other device able to send and receive data and telephone calls) can make a voice call and send a device data transmission to the same call centre which the vehicle sent the data transmission. The data transmissions from each can be used to group the separate transmissions as one event, thereby providing the call centre with data related to the crash event, but also providing voice communication to be able to talk with the persons in the vehicle, letting them know help is on the way and allowing the call centre to coordinate an appropriate response.

The device could be, for example, a mobile phone, a watch able to make voice calls or any other suitable device that is separate from and not part of the vehicle. In some embodiments, the device includes an application which is able to automatically detect a crash event (e.g., through a crash sensor) and automatically start a device data transmission and a voice call upon the detection of such a crash event.

According to an embodiment, the vehicle data transmission comprises one or more of the following: location (e.g., GPS position) at a time of the crash event, time of the crash event occurrence, time of the start of the data transmission, vehicle identification number (VIN), license plate of the vehicle, and other vehicle identifying information (e.g., type of vehicle, color of vehicle, vehicle model and model year).

According to an embodiment, the device data transmission comprises one or more of: location (e.g., GPS position) at a time of the crash event; time of the crash event occurrence; time of activation of voice call; information regarding the vehicle in which the device is connected to at the time of the crash event; information regarding the vehicle to which the device detects possible connections at the time of the crash event; information regarding the vehicles in which the device typically travels; a vehicle identification number (VIN); and other vehicle identifying information (e.g., type of vehicle, color of vehicle).

Such vehicle data transmission information and device data transmission allows for the call centre to coordinate and group the stream of data coming from the vehicle with the data transmission and voice call coming from the device to provide the call centre a better overall understanding of the situation, allowing for a better coordinated and more effective and appropriate response.

According to an embodiment, each of the vehicle data transmission and the device data transmission includes location at the time of the crash event, and the step of using the vehicle data transmission and the device data transmission to group the vehicle data transmission, device data transmission and voice call as one crash event comprises determining the vehicle and the device were in the same or a similar location at the time of the crash event; and grouping the vehicle data transmission, device data transmission and voice call as one crash event based on the determining step. Such a method uses the location information sent by each of the vehicle data transmission and the device data transmission as a way to group the different information streams and voice call into one crash event. By determining that both the device and the vehicle were in the same or similar locations for the crash event, the call centre can use this information to group the vehicle data transmission, device data transmission and voice call into one crash event for more complete communication and an overall more informed response.

According to an embodiment, each of the vehicle data transmission and the device data transmission includes the time of the crash event and/or activation of the data transmission and voice call, and the step of using the vehicle data transmission and the device data transmission to group the vehicle data transmission, device data transmission and voice call as one crash event comprises determining the vehicle and the device were subjected to a crash event within a threshold of time and/or had an activation of data transmission or voice call within a threshold of time; and grouping the vehicle data transmission, device data transmission and voice call as one crash event based the determining. The threshold of time could be, for example, within 30 minutes, preferably within 10 minutes, more preferably within 5 minutes, most preferably within 1 minute, even more preferably within 30 seconds. However, this threshold could vary and/or change depending on settings of the vehicle, device, communication possibilities, etc. The determining and grouping based on the time of the crash event can allow for grouping different data transmissions and a voice call as one event for a better understanding by the call centre, and therefore the ability to coordinate an appropriate response.

Such a method of using the time of crash event and/or data transmission could be used in addition to or in alternative to using the location information as described above for grouping the vehicle data transmission, device data transmission and voice call as one crash event. If used together, the confidence in a correct grouping of the data transmissions and voice call as one event can be higher. However, the use of any of vehicle information, timing or location alone can typically be effective in accurately grouping as one crash event due to the (un)likelihood of different crash events happening at the same time or location and the data/call being sent to the same call centre. Call centres typically cover a specific geographic area due to the particulars of coordinating a local response, meaning the likelihood of two crash events happening at the same time or the same location in the geographic area covered by a specific call centre is small, and different data streams with similar times or similar locations are likely related to one crash event.

According to an embodiment, the device data transmission includes one or more of the following: an identification of the vehicle to which the device is connected and/or to which an available connection is detected; an identification of one or more vehicles associated with the device; and an identification of a vehicle which the user has manually associated with the device. The device can identify the vehicle to which it is currently connected, for example, by a Bluetooth connection for phone calls, navigation and/or media playing in the vehicle. Thus, the connection can allow the device to know the vehicle in which it is travelling and send that information directly through the device data transmission. Even if not connected, the device could detect that there is a connection available with a particular vehicle in which it is travelling and be able to send that vehicle identifying information. Alternatively (or in addition), a user could identify one or more vehicles in which they (and therefore the device) travel in frequently. This could be done in advance, or could be set manually when a user gets into a vehicle for use. Thus, the device data transmission to the call centre could include a list of frequently used vehicles or a manually set vehicle. The call centre can use this information to determine if a vehicle data transmission associated with one or more of the identified vehicles has also or is also being received, and use that to group the data transmissions and voice call as one event. Such a method of sending vehicle identifying information directly through the device data transmission can result in a simple and highly accurate way of a call centre being able to group a vehicle data transmission, a device data transmission and a voice call as one crash event.

According to an embodiment, the step of using the vehicle data transmission and the device data transmission to group the vehicle data transmission, device data transmission and voice call as one crash event is performed at the call centre. The call centre receives the vehicle data transmission and the device data transmission, and determines they are related to the same crash event. This can be through the location and/or time information as discussed above. This could alternatively or in addition be due to vehicle identifying information sent by each data transmission, also described above. The vehicle identifies itself (e.g., through vehicle identification number) in its data transmission, and the device can identify the vehicle in which it is travelling by one of the ways discussed above. Thus, a specific identification of the same vehicle by each separate data transmission, identification of a crash location and/or time of a crash event could be used to accurately and simply group the different data transmissions and voice call by the call centre.

According to an embodiment, the method further comprises sending, by the call centre, a message to the vehicle that the call centre has received a voice call from the device related to the crash event. After a crash event has been detected, a vehicle typically attempts to send the above described data transmission and make a voice call to the call centre. However, as described in the background, the voice call cannot go through in vehicles which need 2G or 3G to make a voice call but there is no 2G or 3G network available. Thus, the vehicle continuously attempts to perform the voice call without success. By the call centre sending a message to the vehicle that a voice call related to the crash event has been received, the vehicle is able to stop its attempts to connect a voice call, thereby ensuring a faster vehicle data transmission. This also allows the vehicle to mute the stereo in the vehicle and keep the hands-free phone system in the vehicle disconnected during this time to not interfere with the voice call through the device.

According to an embodiment, the method further comprises sending, by the call centre, a message to the vehicle and the device that the call centre has ended the call when the voice call is ended. This allows for the vehicle to know when the voice call (from the other device) has ended, and thereby discontinue the muting of the stereo and the blocking of connection between the hands-free system on the vehicle and the device.

According to a further aspect of the invention, a system for coordinating multiple flows of information related to a crash event comprises a call centre configured to receive, from a vehicle system, a vehicle data transmission related to the vehicle and/or crash event; receive, from a device, a voice call and a device data transmission related to one or more of: an identification of the vehicle in which the device is traveling; a location of the device at the time of the crash event and a time of the crash event; and use the vehicle data transmission and the device data transmission to group the vehicle data transmission, device data transmission and voice call as one crash event. Optionally, the vehicle data transmission comprises one or more of the following: location (e.g., GPS position) at a time of the crash event, time of the crash event occurrence, time of the start of the data transmission, vehicle identification number (VIN), license plate of the vehicle, and other vehicle identifying information (e.g., type of vehicle, color of vehicle, vehicle model and model year).

The identification of the vehicle in which the device is traveling; location of the device at the time of the crash event and/or a time of the crash event in the device data transmission can be compared with the information in the vehicle data transmission (e.g., vehicle identifying information, crash event location, crash event time) to determine that the transmissions are likely related to one crash event and group the vehicle data transmission, device data transmission and voice call as one crash event accordingly. Such a system is able to easily and accurately group different data transmissions and a voice call as one crash event, allowing for the call centre to have a more wholistic view of the situation and be able to coordinate an appropriate response as well as communicate with those affected in the crash event.

According to an embodiment, each of the vehicle data transmission and the device data transmission includes location at the time of the crash event and/or data transmission, and the call centre is configured to determine the vehicle and the device were in the same or a similar location at the time of the crash event and/or data transmission; and group the vehicle data transmission, device data transmission and voice call as one crash event based on the determining that the vehicle and the device were in the same or a similar location at the time of the crash event and/or data transmission. The call centre can determine that the vehicle and device were at the same or similar locations based on how the locations (e.g., GPS coordinates) they send in the data transmissions, and how close those locations were at the time of the crash and/or data transmission. In some cases, the threshold for the "same" or "similar" locations could be different depending on a number of factors including but not limited to: how accurate the location information is, the density of vehicle and/or device data transmissions from the area; road and/or vehicle density in the area, etc. Such thresholds for when locations are deemed the same or similar could also change depending on geographic locations, data transmissions at the time, etc. For example, in some cases, the threshold for when locations are determined to be the same or similar enough to be grouped as one event could be static (e.g., in remote areas where it is highly unlikely two data transmissions from separate crash events would be sent from similar locations) or could be dynamic (e.g., changing thresholds in more densely populated areas depending on how close locations are for events occurring at similar times). These options can ensure a flexible system that achieves high accuracy levels for grouping different transmissions as one event.

According to an embodiment, each of the vehicle data transmission and the device data transmission includes the time of the crash event and/or activation of the data transmission and voice call, and the call centre is configured to determine the vehicle and the second device were subjected to a crash event within a threshold of time and/or had an activation of data transmission or voice call within the threshold of time; and group the vehicle data transmission, device data transmission and voice call as one crash event based the determining. The threshold of time, similar to that discussed for the location, can be a static threshold or dynamic depending on the system and circumstances (e.g., many crash events versus few, densely populated area versus not). The threshold could be, for example, 30 minutes, preferably 10 minutes, more preferably 5 minutes. Whatever the threshold, the grouping by time can enable the call centre connect different data streams as one crash event, and therefore have an more full understanding of the crash event.

Such determining and grouping by the call centre, whether through location, time and/or vehicle information, allows the call centre to coordinate a more appropriate and effective response. This also allows for the call centre to be able to communicate with those involved in the crash event through the voice call that has been grouped with the data transmissions.

According to a further aspect of the invention, a method of sending a partial automatic crash notification from a device comprises determining a crash event has occurred; and sending a voice call and a device data transmission to a call centre from the device. The voice call and/or device data transmission can be triggered manually (e.g., pressing a button on the device or vehicle if the device is connected to the vehicle), or automatically upon a detection of a crash event. The device data transmission is related to one or more of: an identification of the vehicle in which the device is traveling; a location of the device at the time of the crash event and a time of the crash event. The device data transmission is configured to be used to group the device data transmission and voice call with a received vehicle data transmission as one crash event. Such a transmission of data from the device and a voice call allows a call centre to group this voice call and device data with a data transmission received directly from the involved vehicle, thereby showing a more wholistic picture of a crash event, and enabling a more effective response. The device data and vehicle data are used to determine that the two data sources are from one crash event in one or more of the various manners described above (e.g., through location and/or time data and/or through vehicle identifying information).

Optionally, this method can be performed through an application on the device. Some phones, and particularly applications in phones already have an automatic crash notification set up where when a crash is detected, they will automatically make a call to emergency services or another designated number. However, these applications typically do not provide any other information regarding the vehicle or location beyond what the user can provide when the call connects. In the current methods and system, an automatic crash notification application or feature of an application can, in the event of a determination of a crash (e.g., crash or impact sensor), automatically initiate both the data transmission and the voice call from the device to a call centre or other designated location in the application protocol. By having the method performed as part of an application on a device (e.g., mobile telephone), the application could be used on multiple devices and/or with multiple different vehicles. This also allows for the application to be easily updated and/or supported as needed without needing access to individual devices and/or vehicles.

According to an embodiment, the device data transmission includes one or more of location (e.g., GPS position) at a time of the crash event; time of the crash event occurrence; time of activation of voice call and/or device data transmission; information regarding the vehicle in which the device is connected to at the time of the crash event; information regarding the vehicle in which the device detects possible connections at the time of the crash event; information regarding the vehicles in which the device typically travels; a vehicle identification number (VIN) and/or other vehicle identifying information (e.g., type of vehicle, colour of vehicle). Such information regarding the location, time and/or vehicle identifying information (directly or indirectly) ensures that the call centre groups the device data transmission with a vehicle data transmission in an accurate manner, thereby ensuring that the voice call and data transmissions can be used together to coordinate an effective response and communication with those involved in the crash event as well as any first responders (e.g., police, emergency personnel) involved and/or coordinated by the call centre.

According to a further aspect of the invention, a method of sending a partial automatic crash notification from a vehicle comprises determining a crash event has occurred; and sending a vehicle data transmission related to the vehicle and/or crash event to a call centre, from a vehicle system. The call centre can use the vehicle data transmission to group the vehicle data transmission with received device data transmission and a voice call as one crash event. In some embodiment, this method can be performed by a vehicle control system using a vehicle crash sensor to determine a crash event has occurred. The vehicle data transmission can be sent from vehicle systems, for example an integrated vehicular cellular communication device, through a wireless communication network, for example, a 4G network, or through any wireless communication device in the vehicle that has an active connection to the Internet (e.g. cellular technology, WiFi, Bluetooth, LORA, V2X, etc.). Such vehicle data transmission can include one or more of: location (e.g., GPS position) at a time of the crash event, time of the crash event occurrence, time of the start of the data transmission, vehicle identification number (VIN), license plate of the vehicle, and other vehicle identifying information (e.g., type of vehicle, color of vehicle, vehicle model and model year), using one or more of these to determine that a separate stream of data related to the same crash event has also been received, and to group these data transmissions and any associated voice call together as one crash event at the call centre.

The call centre can comprise digital tools, for example, a call centre client which can receive, analyze and/or store information about the vehicle and/or the user when a call or data is received at the call centre. Such systems may store, group and/or present information, for example, a reason for the call or data transmission, vehicle information and/or user information. Typically, call centres are equipped to handle queries and/or assistance needs of vehicles and the users of those vehicles. This can include helping with Concierge services, unlocking vehicles, and getting new personal identification number ("PIN") codes, etc. Customers contact the call centres through a voice call, through an application and/or through pressing buttons in the vehicle (e.g., on a button in the roof of the vehicle).,

While the methods and systems disclosed herein use the term "crash event", the methods and systems could relate to and/or be triggered by other vehicle events, such as a flat tire, the vehicle being broken down, or other types of events in which the vehicle and/or passengers need assistance.

### Brief Description of Drawings

Figure 1 illustrates a schematic system for coordinating different data transmissions regarding a crash event; and
Figure 2 illustrates a flowchart schematically depicting a process of coordinating and grouping different data transmissions regarding a crash event.

### Description of Embodiments

The following is a description of certain embodiments of the invention, given by way of example only and with reference to the figures.

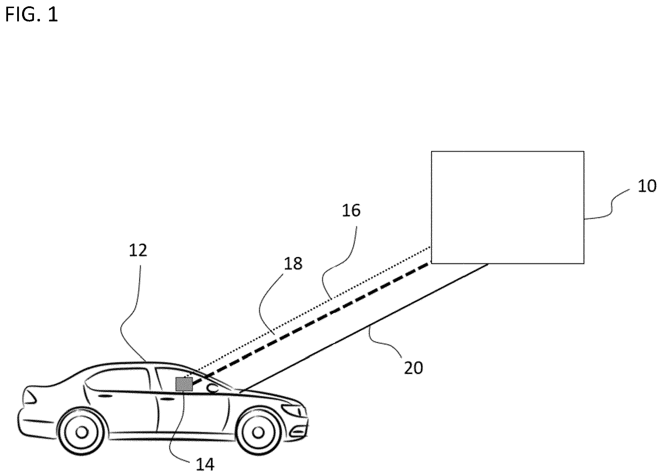

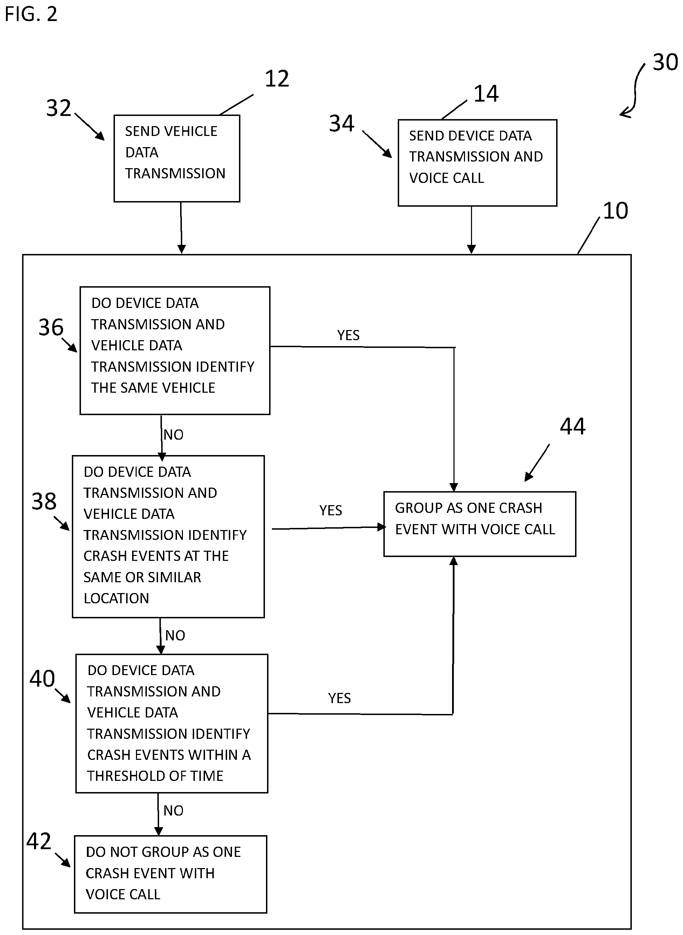

Figure 1 illustrates a schematic system for coordinating different data transmissions regarding a crash event, and Figure 2 illustrates a flowchart schematically depicting a process 30 of coordinating and grouping different data transmissions regarding a crash event.

Fig. 1 shows call centre 10, vehicle 12, device 14, device data transmission 16, voice call 18, and vehicle data transmission 20.

The process 30 of coordinating and grouping various data transmissions starts with steps 32 and 34, typically happening simultaneously or very close in time (e.g., within a threshold of time, for example 5-10 minutes).

In step 32, vehicle 12 sends a vehicle data transmission 20 to call centre 10. Such a vehicle data transmission 20 can be related to the vehicle and/or crash event, and can include one or more of: location (e.g., GPS position) at a time of the crash event, time of the crash event occurrence, time of the start of the data transmission, vehicle identification number (VIN), license plate of the vehicle, and other vehicle identifying information (e.g., type of vehicle, color of vehicle, vehicle model and model year). The data transmission 20 can be sent by a vehicle control system, and integrated vehicular cell phone, or any other system in the vehicle able to send data. This can include a vehicle crash sensor to determine a crash event has occurred, and automatically start the transmission. The vehicle data transmission 20 can be sent from vehicle system through a wireless communication network, for example, a 4G network.

Step 34 shows a separate device 14 sending a device data transmission 16 and a voice call 18 to call centre 10. Device 14 can be, for example, a cellular or mobile phone (including any applications on such a phone), a vehicle integrated cellular phone, a watch able to make voice calls or any other suitable device. In some embodiments, a mobile phone includes an application which performs this step, automatically detecting a crash event (e.g., through a crash sensor) and automatically starting a device data transmission 16 and a voice call 18 upon the detection of such a crash event.

The device data transmission 16 can include one or more of: the device location (e.g., GPS position) at a time of the crash event; time of the crash event occurrence; time of activation of voice call; information regarding the vehicle 12 in which the device 14 is connected to at the time of the crash event; information regarding the vehicle 12 in which the device 14 detects possible connections at the time of the crash event; information regarding the vehicles in which the device typically travels; a vehicle identification number (VIN); and other vehicle identifying information (e.g., type of vehicle, color of vehicle).

Once the call centre 10 receives these data transmissions 16, 20, call centre 10 goes through a process to attempt to determine if the data transmissions 16, 20 and voice call 18 together as one crash event.

In step 36, the call centre 10 starts with determining if the device data transmission 16 and the vehicle data transmission 20 identify the same vehicle 12. If they do identify the same vehicle (for example, the device data transmission includes a vehicle identification number "VIN" of the vehicle in which it is connected to at the time of the crash event, and the vehicle data transmission identifies the same VIN), the call centre 10 groups the data transmissions 16, 20 and voice call 18 as one crash event in step 44. If the data transmissions 16, 20 do not identify the same vehicle or do not identify the same vehicle with a high level of certainty (e.g., the device data transmission sends a list of vehicles in which it frequently travels and there is overlap but it is not certain that it is currently travelling in that vehicle), the call centre 10 can move to step 38.

Step 38 determines whether the device data transmission 16 and the vehicle data transmission 20 identify crash events at the same or similar locations. The call centre 10 can determine that the vehicle 12 and device 14 were at the same or similar locations based on their respective locations sent in the data transmissions, and how close those locations are to each other. In some cases, the threshold for the "same" or "similar" locations could be different depending on a number of factors including but not limited to: how accurate the location information is, the density of vehicle and/or device data transmissions from the area; road and/or vehicle density in the area, etc. Such thresholds for when locations are deemed the same or similar could also vary depending on geographic locations, data transmissions at the time, etc. If it is determined in step 38 that the device 14 and vehicle 12 were in the same or similar locations, the call centre 10 may group them as one crash event in step 44, along with the voice call 18. If the data transmissions do not identify the same or similar locations for the crash events (e.g., one of the data transmissions does not include location) or do not identify similar locations with a high degree of certainty, call centre 10 can move to step 40.

Step 40 looks toward the time of the crash event to determine whether the device transmission 16 and the vehicle transmission 20 identify crash events within a threshold of time. This could be a static threshold, or could be dynamic based on other system and environmental inputs (e.g., amount of transmissions related to crash events coming into the call centre 10 at the time). In some embodiments, this timing could be related to the data transmission in lieu of or in addition to the crash event time. If it is determined that the crash events and/or data transmissions happened from the device 14 and the vehicle 12 within the threshold of time, call centre 10 groups them as one crash event with voice call 18 at step 44.

If none of steps 36, 38, 40 were met with a positive response for grouping the transmissions, it will be determined in step 42 that the transmissions were not related to a single crash event and they will not be grouped.

Once grouped as a single crash event after going through one or more of steps 36, 38, 40, call centre 10 is able to treat data transmissions 16, 20 together to form a more wholistic view of the crash event, and connect the voice call 18 to the data transmissions for communicating with those involved. The call centre 10 can then coordinate an appropriate response to the crash event, for example, call and give needed information (e.g., location and vehicle type) to first responders (e.g., police, emergency personnel) and communicate with the passengers of the vehicle 12 involved that help is on the way.

Thus, the systems and methods disclosed allow for grouping, by a call centre, of different data transmissions and a voice call to provide a more comprehensive overview of the situation and provide an appropriate response in situations where a voice call is not able to be made from a vehicle. This is especially useful in situations where the vehicle requires a 2G and/or 3G network for a voice call, but neither is available. Thus, the systems and methods allow for the voice call (and a further data transmission) to be sent by a separate device and grouped as one crash event by the call centre 10 for communication and response.

While steps 36, 38, 40 are shown and described in a certain order, they could be ordered differently in practice. In some systems and methods, all steps could even be performed simultaneously to determine grouping and a strength of confidence in the grouping determination.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While these specific examples are given related to a crash event, this application is not limited to these specific examples, and this could relate to a non-crash vehicular failure or other event which requires assistance. Additionally, while the example devices and applications have been shown and described with respect to the data transmitted and how, other devices or applications could be used and other types of data could be included depending on the particular situation.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims .

## Claims

1. A method for coordinating data transmissions and a voice call in a vehicle crash event, the method comprising:
receiving at a call centre (10), from a vehicle system, a vehicle data transmission (20) related to the vehicle and/or crash event;
receiving at the call centre (10), from a device (14), a voice call (18) and a device data transmission (16) related to one or more of: an identification of the vehicle in which the device is traveling; a location of the device at the time of the crash event and a time of the crash event;
using the vehicle data transmission (20) and the device data transmission (16) to group the vehicle data transmission (20), device data transmission (16) and voice call (18) as one crash event; and
sending, by the call centre (10), a message to the vehicle (12) that the call centre (10) has received a voice call (18) from the device related to the crash event.

2. The method of claim 1, wherein the vehicle data transmission (20) comprises one or more of the following: location at a time of the crash event, time of the crash event occurrence, time of the start of the data transmission, vehicle identification number (VIN), license plate of the vehicle, and other vehicle identifying information..

3. The method of any of the preceding claims, where each of the vehicle data transmission (20) and the device data transmission (16) includes location at the time of the crash event, and the step of using the vehicle data transmission (20) and the device data transmission (16) to group the vehicle data transmission (20), device data transmission (16) and voice call (18) as one crash event comprises:
determining the vehicle (12) and the device (14) were in the same or a similar location at the time of the crash event; and
grouping the vehicle data transmission (20), device data transmission (16) and voice call (18) as one crash event based on the determining step.

4. The method of any of the preceding claims, where each of the vehicle data transmission and the device data transmission includes the time of the crash event and/or activation of the data transmission and voice call, and the step of using the vehicle data transmission and the device data transmission to group the vehicle data transmission, device data transmission and voice call as one crash event comprises:
determining the vehicle and the device were subjected to a crash event within a threshold of time and/or had an activation of data transmission or voice call within the threshold of time; and
grouping the vehicle data transmission (20), device data transmission (16) and voice call (18) as one crash event based the determining.

5. The method of any of the preceding claims, wherein the step of using the vehicle data transmission (20) and the device data transmission (16) to group the vehicle data transmission (20), device data transmission (16) and voice call (18) as one crash event is performed at the call centre.

6. The method of any of the preceding claims, wherein the device data transmission (16) includes one or more of: an identification of the vehicle to which the device is connected and/or to which the device detects a connection is available; an identification of one or more vehicles associated with the device; and an identification of a vehicle which the user has manually associated with the device.

7. A call centre (10) for coordinating multiple flows of information related to a crash event,
the call centre configured to:
receive, from a vehicle system, a vehicle data transmission (20) related to the vehicle (12) and/or crash event;
receive, from a device (14), a voice call (18) and a device data transmission (16) related to one or more of: an identification of the vehicle in which the device is traveling; a location of the device at the time of the crash event and a time of the crash event;
use the vehicle data transmission and the device data transmission to group the vehicle data transmission (20), device data transmission (16) and voice call (18) as one crash event; and
send a message to the vehicle (12) that the call centre (10) has received a voice call (18) from the device related to the crash event.

8. The call centre (10) of claim 7, wherein the vehicle data transmission includes one or more of the following: location at a time of the crash event, time of the crash event occurrence, time of the start of the data transmission, vehicle identification number (VIN), license plate of the vehicle, and other vehicle identifying information.

9. The call centre (10) of any of claims 7-8, wherein each of the vehicle data transmission (20) and the device data transmission (16) includes location at the time of the crash event and/or data transmission, and the call centre is configured to:
determine the vehicle (12) and the device (14) were in the same or a similar location at the time of the crash event and/or data transmission; and
group the vehicle data transmission (20), device data transmission (16) and voice call (18) as one crash event based on the determining that the vehicle (12) and the device (14) were in the same or a similar location at the time of the crash event and/or data transmission.

10. The call centre (10) of any of claims 7-9, wherein each of the vehicle data transmission (20) and the device data transmission (16) includes the time of the crash event and/or activation of the data transmission and voice call, and the call centre is configured to:
determine the vehicle (12) and the device (14) were subjected to a crash event within a threshold of time and/or had an activation of data transmission or voice call within the threshold of time; and
group the vehicle data transmission (20), device data transmission (16) and voice call (18) as one crash event based the determining.

11. A method by a vehicle (12), the method comprising:
determining a crash event has occurred;
sending a vehicle data transmission (20) related to the vehicle and/or crash event to a call centre (10), from a vehicle system;
receiving, from the call centre (10), a message that the call centre (10) has received a voice call (18) from a device related to the crash event; and
upon the reception of the message, stopping initiation, by the vehicle, of a voice call connection to the call centre;
wherein the call centre can use the vehicle data transmission to group the vehicle data transmission (20) with received device data transmission(16) and the voice call (18)as one crash event.

## Patentansprüche

1. Verfahren zur Koordination von Datenübertragungen und eines Sprachanrufs bei einem Fahrzeugunfallereignis, wobei das Verfahren umfasst:
Empfangen, in einer Anrufzentrale (10), von einem Fahrzeugsystem, einer Fahrzeugdatenübertragung (20), die sich auf das Fahrzeug und/oder Unfallereignis bezieht;
Empfangen, in der Anrufzentrale (10), von einer Vorrichtung (14), eines Sprachanrufs (18) und einer Vorrichtungsdatenübertragung (16), die sich auf eines oder mehrere beziehen von: einer Identifikation des Fahrzeugs, in dem die Vorrichtung mitfährt; einem Ort der Vorrichtung zum Zeitpunkt des Unfallereignisses und einer Zeit des Unfallereignisses;
Verwenden der Fahrzeugdatenübertragung (20) und der Vorrichtungsdatenübertragung (16), um die Fahrzeugdatenübertragung (20), die Vorrichtungsdatenübertragung (16) und den Sprachanruf (18) als ein Unfallereignis zu gruppieren; und
Senden, durch die Anrufzentrale (10), einer Nachricht an das Fahrzeug (12), dass die Anrufzentrale (10) einen Sprachanruf (18) von der Vorrichtung empfangen hat, der sich auf das Unfallereignis bezieht.

2. Verfahren nach Anspruch 1, wobei die Fahrzeugdatenübertragung (20) eines oder mehrere der folgenden Merkmale umfasst: Ort zum Zeitpunkt des Unfallereignisses, Zeitpunkt des Eintretens des Unfallereignisses, Zeitpunkt des Beginns der Datenübertragung, Fahrzeugidentifikationsnummer (Vehicle Identification Number, VIN), amtliches Kennzeichen des Fahrzeugs und andere fahrzeugidentifizierende Informationen.

3. Verfahren nach einem der vorhergehenden Ansprüche, wobei sowohl die Fahrzeugdatenübertragung (20) als auch die Vorrichtungsdatenübertragung (16) den Ort zum Zeitpunkt des Unfallereignisses umfassen, und wobei der Schritt des Verwendens der Fahrzeugdatenübertragung (20) und der Vorrichtungsdatenübertragung (16), um die Fahrzeugdatenübertragung (20), Vorrichtungsdatenübertragung (16) und den Sprachanruf (18) als ein Unfallereignis zu gruppieren, Folgendes umfasst:
Bestimmen, dass sich das Fahrzeug (12) und die Vorrichtung (14) zum Zeitpunkt des Unfallereignisses am selben oder an einem ähnlichen Ort befanden; und
Gruppieren der Fahrzeugdatenübertragung (20), Vorrichtungsdatenübertragung (16) und des Sprachanrufs (18) als ein Unfallereignis auf Grundlage des Bestimmungsschritts.

4. Verfahren nach einem der vorhergehenden Ansprüche, wobei sowohl die Fahrzeugdatenübertragung als auch die Vorrichtungsdatenübertragung den Zeitpunkt des Unfallereignisses und/oder die Aktivierung der Datenübertragung und des Sprachanrufs umfassen, und wobei der Schritt des Verwendens der Fahrzeugdatenübertragung und der Vorrichtungsdatenübertragung, um die Fahrzeugdatenübertragung, Vorrichtungsdatenübertragung und den Sprachanruf als ein Unfallereignis zu gruppieren, Folgendes umfasst:
immen, dass das Fahrzeug und die Vorrichtung innerhalb eines Zeitschwellenwerts einem Unfallereignis ausgesetzt waren und/oder eine Aktivierung der Datenübertragung oder des Sprachanrufs innerhalb des Zeitschwellenwerts aufwiesen; und
Gruppieren der Fahrzeugdatenübertragung (20), Vorrichtungsdatenübertragung (16) und des Sprachanrufs (18) als ein Unfallereignis auf Grundlage der Bestimmung.

5. Verfahren nach einem der vorhergehenden Ansprüche, wobei der Schritt des Verwendens der Fahrzeugdatenübertragung (20) und der Vorrichtungsdatenübertragung (16), um die Fahrzeugdatenübertragung (20), Vorrichtungsdatenübertragung (16) und den Sprachanruf (18) als ein Unfallereignis zu gruppieren, in der Anrufzentrale durchgeführt wird.

6. Verfahren nach einem der vorhergehenden Ansprüche, wobei die Vorrichtungsdatenübertragung (16) eines oder mehrere der folgenden Merkmale umfasst: eine Identifikation des Fahrzeugs, mit dem die Vorrichtung verbunden ist und/oder bei dem die Vorrichtung erkennt, dass eine Verbindung verfügbar ist; eine Identifikation eines oder mehrerer der Vorrichtung zugeordneter Fahrzeuge; und eine Identifikation eines Fahrzeugs, das der Benutzer manuell der Vorrichtung zugeordnet hat.

7. Anrufzentrale (10) zur Koordination mehrerer Informationsflüsse in Bezug auf ein Unfallereignis, wobei die Anrufzentrale dazu ausgelegt ist:
von einem Fahrzeugsystem eine Fahrzeugdatenübertragung (20) zu empfangen, die sich auf das Fahrzeug (12) und/oder Unfallereignis bezieht;
von einer Vorrichtung (14) einen Sprachanruf (18) und eine Vorrichtungsdatenübertragung (16) zu empfangen, die sich auf eines oder mehrere beziehen von: einer Identifikation des Fahrzeugs, in dem die Vorrichtung mitfährt; einem Ort der Vorrichtung zum Zeitpunkt des Unfallereignisses und einer Zeit des Unfallereignisses;
die Fahrzeugdatenübertragung und die Vorrichtungsdatenübertragung zu verwenden, um die Fahrzeugdatenübertragung (20), Vorrichtungsdatenübertragung (16) und den Sprachanruf (18) als ein Unfallereignis zu gruppieren; und
eine Nachricht an das Fahrzeug (12) zu senden, dass die Anrufzentrale (10) einen Sprachanruf (18) von der Vorrichtung empfangen hat, der sich auf das Unfallereignis bezieht.

8. Anrufzentrale (10) nach Anspruch 7, wobei die Fahrzeugdatenübertragung eines oder mehrere der folgenden Merkmale umfasst: Ort zum Zeitpunkt des Unfallereignisses, Zeitpunkt des Eintretens des Unfallereignisses, Zeitpunkt des Beginns der Datenübertragung, Fahrzeugidentifikationsnummer (Vehicle Identification Number, VIN), amtliches Kennzeichen des Fahrzeugs und andere fahrzeugidentifizierende Informationen.

9. Anrufzentrale (10) nach einem der Ansprüche 7-8, wobei sowohl die Fahrzeugdatenübertragung (20) als auch die Vorrichtungsdatenübertragung (16) den Ort zum Zeitpunkt des Unfallereignisses und/oder der Datenübertragung umfassen, und wobei die Anrufzentrale dazu ausgelegt ist:
zu bestimmen, dass sich das Fahrzeug (12) und die Vorrichtung (14) zum Zeitpunkt des Unfallereignisses und/oder der Datenübertragung am selben oder an einem ähnlichen Ort befanden; und
die Fahrzeugdatenübertragung (20), Vorrichtungsdatenübertragung (16) und den Sprachanruf (18) als ein Unfallereignis auf Grundlage der Bestimmung zu gruppieren, dass sich das Fahrzeug (12) und die Vorrichtung (14) zum Zeitpunkt des Unfallereignisses und/oder der Datenübertragung am selben oder an einem ähnlichen Ort befanden.

10. Anrufzentrale (10) nach einem der Ansprüche 7-9, wobei sowohl die Fahrzeugdatenübertragung (20) als auch die Vorrichtungsdatenübertragung (16) den Zeitpunkt des Unfallereignisses und/oder die Aktivierung der Datenübertragung und des Sprachanrufs umfassen, und wobei die Anrufzentrale dazu ausgelegt ist:
zu bestimmen, dass das Fahrzeug (12) und die Vorrichtung (14) innerhalb eines Zeitschwellenwerts einem Unfallereignis ausgesetzt waren und/oder eine Aktivierung der Datenübertragung oder des Sprachanrufs innerhalb des Zeitschwellenwerts aufwiesen; und
die Fahrzeugdatenübertragung (20), Vorrichtungsdatenübertragung (16) und den Sprachanruf (18) als ein Unfallereignis auf Grundlage der Bestimmung zu gruppieren.

11. Verfahren durch ein Fahrzeug (12), wobei das Verfahren Folgendes umfasst:
Bestimmen, dass ein Unfallereignis eingetreten ist;
Senden einer Fahrzeugdatenübertragung (20), die sich auf das Fahrzeug und/oder Unfallereignis bezieht, von einem Fahrzeugsystem an eine Anrufzentrale (10);
Empfangen, von der Anrufzentrale (10), einer Nachricht, dass die Anrufzentrale (10) einen Sprachanruf (18) von einer Vorrichtung empfangen hat, der sich auf das Unfallereignis bezieht; und
bei Empfang der Nachricht das Stoppen der Einleitung, durch das Fahrzeug, einer Sprachanrufverbindung zur Anrufzentrale;
wobei die Anrufzentrale die Fahrzeugdatenübertragung verwenden kann, um die Fahrzeugdatenübertragung (20) mit einer empfangenen Vorrichtungsdatenübertragung (16) und dem Sprachanruf (18) als ein Unfallereignis zu gruppieren.

## Revendications

1. Procédé de coordination de transmissions de données et d'un appel vocal lors d'un événement de collision de véhicule, le procédé comprenant :
la réception dans un centre d'appels (10), en provenance d'un système de véhicule, d'une transmission de données de véhicule (20) associée au véhicule et/ou à l'événement de collision ;
la réception dans le centre d'appels (10), en provenance d'un dispositif (14), d'un appel vocal (18) et d'une transmission de données de dispositif (16) associée à l'un ou plusieurs de : une identification du véhicule dans lequel le dispositif se déplace ; un emplacement du dispositif au moment de l'événement de collision et un moment de l'événement de collision ;
l'utilisation de la transmission de données de véhicule (20) et de la transmission de données de dispositif (16) pour regrouper la transmission de données de véhicule (20), la transmission de données de dispositif (16) et l'appel vocal (18) en un seul événement de collision ; et
l'envoi, par le centre d'appels (10), d'un message au véhicule (12) indiquant que le centre d'appels (10) a reçu un appel vocal (18) en provenance du dispositif associé à l'événement de collision.

2. Procédé selon la revendication 1, dans lequel la transmission de données de véhicule (20) comprend un ou plusieurs de ce qui suit : emplacement à un moment de l'événement de collision, moment de l'occurrence de l'événement de collision, moment du début de la transmission de données, numéro d'identification de véhicule (VIN), plaque d'immatriculation du véhicule, et autres informations d'identification de véhicule.

3. Procédé selon l'une quelconque des revendications précédentes, dans lequel chacune de la transmission de données de véhicule (20) et de la transmission de données de dispositif (16) inclut un emplacement au moment de l'événement de collision, et l'étape d'utilisation de la transmission de données de véhicule (20) et de la transmission de données de dispositif (16) pour regrouper la transmission de données de véhicule (20), la transmission de données de dispositif (16) et l'appel vocal (18) en un seul événement de collision comprend :
la détermination du fait que le véhicule (12) et le dispositif (14) se trouvaient au même emplacement ou à un emplacement similaire au moment de l'événement de collision ; et
le regroupement de la transmission de données de véhicule (20), de la transmission de données de dispositif (16) et de l'appel vocal (18) en un seul événement de collision sur la base de l'étape de détermination.

4. Procédé selon l'une quelconque des revendications précédentes, dans lequel chacune de la transmission de données de véhicule et de la transmission de données de dispositif inclut le moment de l'événement de collision et/ou l'activation de la transmission de données et de l'appel vocal, et l'étape d'utilisation de la transmission de données de véhicule et de la transmission de données de dispositif pour regrouper la transmission de données de véhicule, la transmission de données de dispositif et l'appel vocal en un seul événement de collision comprend :
la détermination du fait que le véhicule et le dispositif ont été soumis à un événement de collision dans un seuil de temps et/ou ont eu une activation de transmission de données ou d'appel vocal dans le seuil de temps ; et
le regroupement de la transmission de données de véhicule (20), de la transmission de données de dispositif (16) et de l'appel vocal (18) en un seul événement de collision sur la base de la détermination.

5. Procédé selon l'une quelconque des revendications précédentes, dans lequel l'étape d'utilisation de la transmission de données de véhicule (20) et de la transmission de données de dispositif (16) pour regrouper la transmission de données de véhicule (20), la transmission de données de dispositif (16) et l'appel vocal (18) en un seul événement de collision est effectuée dans le centre d'appels.

6. Procédé selon l'une quelconque des revendications précédentes, dans lequel la transmission de données de dispositif (16) inclut l'une ou plusieurs de : une identification du véhicule auquel le dispositif est connecté et/ou pour lequel le dispositif détecte une connexion disponible ; une identification d'un ou plusieurs véhicules associés au dispositif ; et une identification d'un véhicule que l'utilisateur a associé manuellement au dispositif.

7. Centre d'appels (10) pour coordonner plusieurs flux d'informations associés à un événement de collision, le centre d'appels étant configuré pour :
recevoir, en provenance d'un système de véhicule, une transmission de données de véhicule (20) associée au véhicule (12) et/ou à l'événement de collision ;
recevoir, en provenance d'un dispositif (14), un appel vocal (18) et une transmission de données de dispositif (16) associée à l'un ou plusieurs de : une identification du véhicule dans lequel le dispositif se déplace ; un emplacement du dispositif au moment de l'événement de collision et un moment de l'événement de collision ;
utiliser la transmission de données de véhicule et la transmission de données de dispositif pour regrouper la transmission de données de véhicule (20), la transmission de données de dispositif (16) et l'appel vocal (18) en un seul événement de collision ; et
envoyer un message au véhicule (12) indiquant que le centre d'appels (10) a reçu un appel vocal (18) en provenance du dispositif associé à l'événement de collision.

8. Centre d'appels (10) selon la revendication 7, dans lequel la transmission de données de véhicule inclut un ou plusieurs de ce qui suit : emplacement à un moment de l'événement de collision, moment de l'occurrence de l'événement de collision, moment du début de la transmission de données, numéro d'identification de véhicule (VIN), plaque d'immatriculation du véhicule, et autres informations d'identification de véhicule.

9. Centre d'appels (10) selon l'une quelconque des revendications 7 à 8, dans lequel chacune de la transmission de données de véhicule (20) et de la transmission de données de dispositif (16) inclut un emplacement au moment de l'événement de collision et/ou de la transmission de données, et le centre d'appels est configuré pour :
déterminer que le véhicule (12) et le dispositif (14) se trouvaient au même emplacement ou à un emplacement similaire au moment de l'événement de collision et/ou de la transmission de données ; et
regrouper la transmission de données de véhicule (20), la transmission de données de dispositif (16) et l'appel vocal (18) en un seul événement de collision sur la base de la détermination du fait que le véhicule (12) et le dispositif (14) se trouvaient au même emplacement ou à un emplacement similaire au moment de l'événement de collision et/ou de la transmission de données.

10. Centre d'appels (10) selon l'une quelconque des revendications 7 à 9, dans lequel chacune de la transmission de données de véhicule (20) et de la transmission de données de dispositif (16) inclut le moment de l'événement de collision et/ou de l'activation de la transmission de données et de l'appel vocal, et le centre d'appels est configuré pour :
déterminer que le véhicule (12) et le dispositif (14) ont été soumis à un événement de collision dans un seuil de temps et/ou ont eu une activation de transmission de données ou d'appel vocal dans le seuil de temps ; et
regrouper la transmission de données de véhicule (20), la transmission de données de dispositif (16) et l'appel vocal (18) en un seul événement de collision sur la base de la détermination.

11. Procédé d'un véhicule (12), le procédé comprenant :
la détermination du fait qu'un événement de collision s'est produit ;
l'envoi d'une transmission de données de véhicule (20) associée au véhicule et/ou à l'événement de collision à un centre d'appels (10), depuis un système du véhicule ;
la réception, en provenance du centre d'appels (10), d'un message indiquant que le centre d'appels (10) a reçu un appel vocal (18) en provenance d'un dispositif associé à l'événement de collision ; et
après réception du message, l'arrêt de l'initiation, par le véhicule, d'une connexion d'appel vocal vers le centre d'appels ;
dans lequel le centre d'appels peut utiliser la transmission de données de véhicule pour regrouper la transmission de données de véhicule (20) avec la transmission de données de dispositif (16) et l'appel vocal (18) reçus en un seul événement de collision.
